# EUROPÄISCHE PATENTANMELDUNG

(11) **EP 1 547 685 A1**
(43) Veröffentlichungstag der Anmeldung: **29.06.2005**
(21) Anmeldenummer: 03029838.4
(22) Anmeldetag: 24.12.2003
(51) Int. Cl.: B01J 37/34, B01J 37/02, B01J 23/38, B01J 23/74, F23D 14/18

(54) **Verfahren zur Herstellung eines Katalysators zur flammlosen Erzeugung von Wärmestrahlung und Vorrichtung zur Aufnahme des Katalysators**

(71) Anmelder: Nijmaprobe B.V., 7332 BE Apeldoorn (NL)
(72) Erfinder: Arie Sint, Nicolaas, 7332 Apeldoorn (NL)
(74) Vertreter: Stenger, Watzke & Ring Patentanwälte

(57) **Zusammenfassung**

Die vorliegende Erfindung betrifft ein Verfahren zur Herstellung eines Katalysators zur flammlosen Umsetzung von Wasserstoff und/oder Kohlenwasserstoffe enthaltenden Flüssigkeiten und/oder Gasen in Wärmestrahlung. Darüber hinaus betrifft die Erfindung ein Gehäuse zur Aufnahme des Katalysators, in welchem die katalytische Umsetzung von Wasserstoff und/oder Kohlenwasserstoffe enthaltenden Flüssigkeiten und/oder Gasen in Wärmestrahlung stattfinden kann. Das Verfahren zur Herstellung eines Katalysators zur flammlosen Umsetzung von Wasserstoff und/oder Kohlenwasserstoffe enthaltenden Flüssigkeiten und/oder Gasen in Wärmestrahlung weist die Schritte auf: Bereitstellen eines Trägermaterials auf Aluminium- und/oder Siliciumbasis, Kontaktieren des Trägermaterials mit einer wässrigen Lösung aufweisend mindestens ein Metallsalz, sowie mindestens einen organischen Lösungsvermittler zur Verbesserung der Löslichkeit der eingesetzten Metallsalze, und Trocknung des Trägermaterials, um ein imprägniertes Trägermaterial zu erhalten.

## Beschreibung

Die vorliegende Erfindung betrifft ein Verfahren zur Herstellung eines Katalysators zur flammlosen Umsetzung von Wasserstoff und/oder Kohlenwasserstoffe enthaltenden Flüssigkeiten und/oder Gasen in Wärmestrahlung.

Im Stand der Technik sind unterschiedliche Systeme zur Erzeugung von Wärmestrahlung aus Wasserstoff und/oder Kohlenwasserstoffe enthaltenden Flüssigkeiten und/oder Gasen bekannt. Zu diesen Systemen gehören mit Erdgas oder Flüssiggas betriebene Infrarotstrahler auf Keramikbasis oder auch Strahlersysteme auf Ganzmetallbasis. Solche Systeme sind zum Beispiel aus DE 19544417, DE3529005 oder auch EP 0 478 644 bekannt. DE 69407956 offenbart eine Vorrichtung für die katalytisch unterstützte Verbrennung von gasförmigen, kohlenwasserstoffhaltigen Materialien. Als Katalysator dient hier auf einem aus Aluminium-, Siliciumdi- und Magnesiumoxid bestehenden Träger aufgebrachtes Palladiumoxid. Der so erstellte Katalysator dient zur Unterstützung der Verbrennung von kohlenwasserstoffhaltigen Brennstoffen.

Den gemäß des Stands der Technik gefertigten Strahlern liegt das Problem zugrunde, daß sie einerseits eine offene Flamme aufweisen und andererseits, daß sich das Frequenzspektrum der von diesen Strahlern abgegebenen Wärmestrahlung wenn überhaupt nur wenig beeinflussen läßt. Das Vorhandensein einer offenen Flamme führt dazu, daß solche Strahlersysteme nicht in Gefährdungsbereichen, wo es zur Bildung explosiver Luftgasgemische kommen kann oder wo aus anderen Gründen offene Flammenquellen zu vermeiden sind, einsetzbar sind. Die fehlende Möglichkeit der Einflußnahme auf das Strahlungsspektrum der durch diese Strahler abgegebenen Strahlung führt zu einer weiteren Beschränkung des Einsatzbereiches.

Die **Aufgabe** der vorliegenden Erfindung ist es, eine Vorrichtung sowie einen für eine solche Vorrichtung geeigneten Katalysator zur Verfügung zu stellen, mit welchem eine flammlose Umsetzung von Wasserstoff und/oder Kohlenwasserstoff enthaltenden Flüssigkeiten und/oder Gasen in Wärmestrahlung möglich ist, die die oben genannten Nachteile zu überwinden vermögen.

**Gelöst** wird diese Aufgabe durch ein Verfahren zur Herstellung eines Katalysators zur flammlosen Umsetzung von Wasserstoff und/oder Kohlenwasserstoffe enthaltenden Flüssigkeiten und/oder Gasen in Wärmestrahlung, aufweisend die Schritte: Bereitstellen eines Trägermaterials auf Aluminium- und/oder Siliciumbasis, Kontaktieren des Trägermaterials mit einer wässrigen Lösung aufweisend mindestens ein Metallsalz, sowie mindestens einen organischen Lösungsvermittler zur Verbesserung der Löslichkeit der eingesetzten Metallsalze, und Trocknung des Trägermaterials, um ein imprägniertes Trägermaterial zu erhalten. Des weiteren wird zur Lösung der Aufgabe eine Vorrichtung zur flammlos katalytischen Umsetzung von Wasserstoff und/oder Kohlenwasserstoffe enthaltenden Flüssigkeiten und/oder Gasen in Wärmestrahlung vorgeschlagen, welche ein an zumindest einer Seite offenes Gehäuse, eine Vorheizvorrichtung und einen Katalysator gemäß der vorangestellten Lösung der Aufgabe aufweist.

Zur Herstellung eines erfindungsgemäßen Katalysators wird vorgeschlagen, ein faserartiges Trägermaterial auf Aluminium- und/oder Siliciumbasis mit einer Dichte < 4 g / cm³ mit einer wässrigen Lösung mindestens eines Metallsalzes zu imprägnieren. Als Metallion solcher Metallsalze können Gold-, Silber-, Platin-, Rhodium-, Osmium-, Kobalt-, Vanadium-, Titan-, Zirkonium-, Mangan- oder Nickelionen dienen. Vorzugsweise werden Platinsalze eingesetzt.

Als Anionen solcher Metallsalze können Halogenit-, Amin-, Sulfid-, Sulfat-, Nitrat-, Caboxylat-, Sulfonat-, Phosphat-, Oxyd- oder Alkoholationen dienen. In einer bevorzugten Ausführungsform werden Halogenitanionen für das Metallsalz gewählt.

Zur Verbesserung der Löslichkeit des Metallsalzes in einer wässrigen Lösung wird dieser ein organischer Lösungsvermittler zugesetzt.

Um die Löslichkeit des Metallsalzes in der wässrigen Lösung weiter zu erhöhen, wird diese kurzzeitig einem permanenten magnetischen Feld ausgesetzt. Mit der so erhaltenen Lösung wird das zuvor beschriebene Trägermaterial imprägniert und im Anschluß bei einer Temperatur von 40 bis ca. 300° C, vorzugsweise 100 bis 200° C getrocknet.

Das so erhaltene Katalysatorvlies kann vorteilhafterweise in eine Vorrichtung eingebracht werden, welche aus einem an einer Seite offenen, wannenförmigen Gehäuse besteht, in welches eine Vorheizvorrichtung integriert ist. Diese Vorheizvorrichtung kann als elektrischer Heizstab oder auch durch andere geeignete Ausbildungsformen verwirklicht sein. Die Vorheizvorrichtung dient zum Erreichen einer hinreichenden Betriebstemperatur zur katalytischen Umsetzung vor der Inbetriebnahme der erfindungsgemäßen Vorrichtung. Des weiteren verfügt das wannenförmige Gehäuse über mindestens einen Einlaß für das mit Hilfe des Katalysators umzusetzende Gas oder die umzusetzende Flüssigkeit. Das Katalysatorvlies kann durch ein Drahtmaschengitter oder durch andere geeignete Vorrichtungen im Gehäuse fixiert werden. Überraschenderweise hat sich herausgestellt, daß bei der Verwendung von Flüssiggas in der vorbeschriebenen Vorrichtung als Brenngas der Beaufschlagungsdruck dieses Gases kleiner 50 mbar, vorzugsweise kleiner 20 mbar und besonders bevorzugt kleiner 5 mbar sein kann. Überraschenderweise stellte sich heraus, daß sich die Wellenlänge der bei der katalytischen Umsetzung in der erfindungsgemäßen Vorrichtung erzeugten Wärmestrahlung durch die Bauart des Gehäuses beeinflussen läßt. So nehmen z. B. sowohl die Gehäusegröße als auch die Menge der Gas- bzw. Flüssigkeitseinlässe Einfluß auf das Frequenzspektrum. Darüber hinaus wurde festgestellt, daß der Beaufschlagungsdruck des umzusetzenden Gases oder der umzusetzenden Flüssigkeit einen Einfluß auf das abgegebene Frequenzspektrum der Wärmestrahlung besitzt. Gleichfalls nimmt die Stärke und/oder Dichte des verwendeten Trägermaterials für den erfindungsgemäßen Katalysator Einfluß auf das Frequenzspektrum.

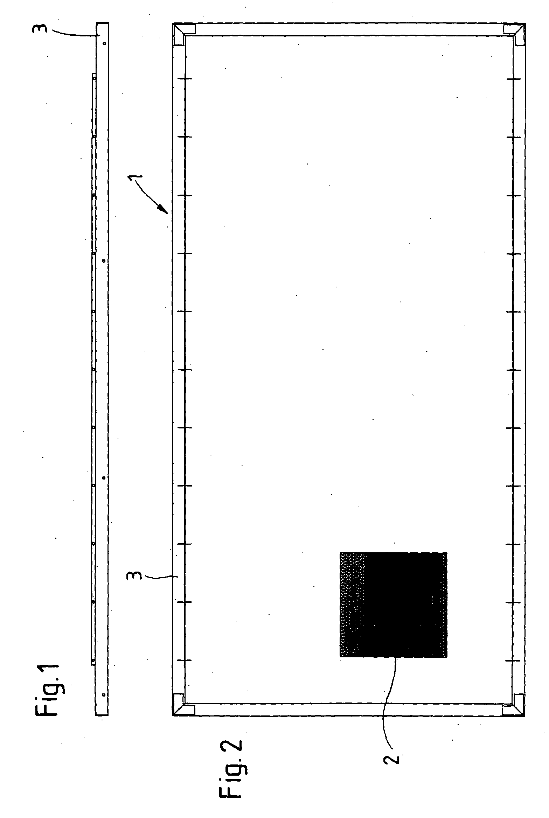

Die Figuren 1 bis 4 zeigen eine mögliche Ausbildungsform eines erfindungsgemäßen Gehäuses für einen erfindungsgemäßen Katalysator, auf welchen sich die Erfindung jedoch nicht beschränken läßt.

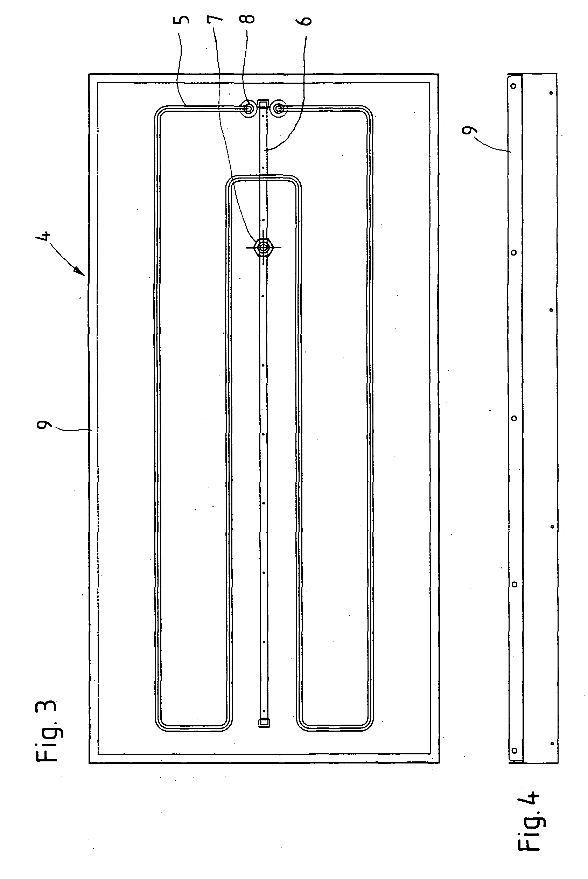

Die Figuren 1 und 2 zeigen das Gehäuseoberteil (1) im Profil (Fig.1) und in der Aufsicht (Fig.2). Der äußere Rahmen (3) faßt das Abdeckgitter (2) ein und dient zur Befestigung des Gehäuseoberteils (1) am Gehäuseunterteil (4). Die Figuren 3 und 4 zeigen das Gehäuseunterteil im Profil (Fig.3) und in der Aufsicht (Fig.4). Der Rahmen (9) dient zur Befestigung des Gehäuseoberteil am Gehäuseunterteil. Das Gehäuseunterteil (4) weist eine elektrische Vorheizeinrichtung (5) auf, welche durch die Durchführungen (8) mit einer Stromquelle verbunden werden. Zur Verteilung des gasförmigen Brennstoffs weist das Gehäuseunterteil ein Gasverteilungrohr (6) auf, welches über einen Gaseinlass (7) mit Brennstoff gespeist wird.

Vorteilhafterweise läßt sich eine mit einem erfindungsgemäßen Katalysator ausgerüstete erfindungsgemäße Vorrichtung zur Wärmeerzeugung nutzen. Dabei können mehrere erfindungsgemäße Vorrichtungen als Einzelsegmente zu größeren Segmenten zusammengefügt werden. Solche Systeme lassen sich z. B. zur Warmwasser- oder Warmlufterzeugung, in Gebäudeheizungsanlagen, in der Lackierindustrie zur Lacktrocknung, zur Werkstückerwärmung in der Umformtechnik und Kunststoff- oder Gummiindustrie oder zur katalytischen Umsetzung von Ab- oder Schadgasen einsetzen.

### Bezugszeichenliste

- 1: Gehäuseoberteil
- 2: Ausschnitt Abdeckgitter
- 3: Rahmen Gehäuseoberteil
- 4: Gehäuseunterteil
- 5: Vorheizeinrichtung
- 6: Gasverteilrohr
- 7: Gaseinlass
- 8: Durchführung Vorheizeinrichtung
- 9: Rahmen Gehäuseunterteil

## Patentansprüche

1. Verfahren zur Herstellung eines Katalysators zur flammlosen Umsetzung von Wasserstoff und / oder Kohlenwasserstoffe enthaltenen Flüssigkeiten und / oder Gasen in Wärmestrahlung, aufweisend die Schritte:
- Bereitstellen eines Trägermaterials auf Aluminium- und / oder Siliciumbasis,
- Kontaktieren des Trägermaterials mit einer wässrigen Lösung aufweisend mindestens ein Metallsalz, sowie mindestens einen organischen Lösungsvermittler zur Verbesserung der Löslichkeit der eingesetzten Metallsalze, und
- Trocknung des Trägermaterials
um ein imprägniertes Trägermaterial zu erhalten.

2. Verfahren gemäß Anspruch 1, **dadurch gekennzeichnet, daß** das Trägermaterial eine Dichte von <4 g/cm³ aufweist.

3. Verfahren gemäß mindestens einem der Ansprüche 1 und 2, **dadurch gekennzeichnet, daß** das Metall des Metallsalzes mindestens ein Metall der Gruppe bestehend aus Gold, Silber, Platin, Rhodium, Osmium, Cobalt, Vanadium, Titan, Zirconium, Mangan oder Nickel ist.

4. Verfahren gemäß mindestens einem der Ansprüche 1 bis 3, **dadurch gekennzeichnet, daß** das Anion des Metallsalzes mindestens ein Anion der Gruppe bestehend aus Halogenid, Amin, Sulfid, Sulfat, Nitrat, Carboxylat, Sulfonat, Phosphat, Oxid oder Alkoholat ist.

5. Verfahren gemäß mindestens einem der Ansprüche 1 bis 4, **dadurch gekennzeichnet, daß** die metallsalzhaltige Lösung vor der Kontaktierung des Trägermaterials magnetisch polarisiert wird.

6. Verfahren gemäß mindestens einem der Ansprüche 1 bis 5, **dadurch gekennzeichnet, daß** das Trägermaterial im Anschluß an die Kontaktierung mit der metallsalzhaltigen Lösung bei einer Temperatur von 40 bis 300 °C getrocknet wird.

7. Vorrichtung zur flammlos katalytischen Umsetzung von Wasserstoff und / oder Kohlenwasserstoffe enthaltenen Flüssigkeiten und / oder Gasen in Wärmestrahlung aufweisend:
- Ein an zumindestens einer Seite offenes Gehäuse,
- eine Vorheizvorrichtung
- einen gemäß einem oder mehreren der Ansprüche 1 bis 6 hergestellten Katalysator.

8. Vorrichtung gemäß Anspruch 7, **dadurch gekennzeichnet, daß** das Gehäuse mindestens einen Einlaß für Gas und / oder Flüssigkeit aufweist.

9. Vorrichtung gemäß einem oder mehreren der Ansprüche 7 und 8, **dadurch gekennzeichnet, daß** das zu oxidierende Gas und / oder die Flüssigkeit der Vorrichtung mit einem Druck >50 mbar, vorzugsweise >20 mbar, besonders bevorzugt >5 mbar zugeführt wird.

10. Vorrichtung gemäß einem oder mehreren der Ansprüche 7 bis 9, **dadurch gekennzeichnet, daß** sich die Wellenlänge der bei der katalytischen Umsetzung erzeugten Wärmestrahlung durch die Bauart des Gehäuses beeinflussen läßt.

11. Vorrichtung gemäß einem oder mehreren der Ansprüche 7 bis 10, **dadurch gekennzeichnet, daß** sich die Wellenlänge der bei der katalytischen Umsetzung erzeugten Wärmestrahlung durch den Druck, mit welchem das zu oxidierende Gas und / oder die Flüssigkeit der Vorrichtung zugeführt werden beeinflussen läßt.

12. Vorrichtung gemäß einem oder mehreren der Ansprüche 7 bis 11, **dadurch gekennzeichnet, daß** sich die Wellenlänge der bei der katalytischen Umsetzung erzeugten Wärmestrahlung durch die Stärke und / oder Dichte des verwendeten Katalysators beeinflussen läßt.

13. Verwendung einer Vorrichtung gemäß einem oder mehreren der Ansprüche 7 bis 12 als Vorrichtung zur Wärmeerzeugung.

14. Vorrichtung gemäß Anspruch 13, **dadurch gekennzeichnet, daß** diese aus einem oder mehreren Segmenten besteht, welche aus Vorrichtungen gemäß einem oder mehreren der Ansprüche 7 bis 12 gebildet werden, und welche miteinander verbunden werden können.

15. Verwendung einer Vorrichtung gemäß einem oder mehreren der Ansprüche 13 und 14 zur Warmwassererzeugung.

16. Verwendung einer Vorrichtung gemäß einem oder mehreren der Ansprüche 13 und 14 in Gebäudeheizungsanlagen.

17. Verwendung einer Vorrichtung gemäß einem oder mehreren der Ansprüche 13 und 14 zur Warmlufterzeugung.

18. Verwendung einer Vorrichtung gemäß einem oder mehreren der Ansprüche 13 und 14 zur Lacktrocknung in der Lackierindustrie.

19. Verwendung einer Vorrichtung gemäß einem oder mehreren der Ansprüche 13 und 14 zur Werkstückerwärmung in der Umformtechnik und Kunststoff- oder Gummiindustrie.

20. Verwendung einer Vorrichtung gemäß einem oder mehreren der Ansprüche 13 und 14 zur katalytischen Umsetzung von Ab- oder Schadgasen.

## Geänderte Patentansprüche

### Geänderte Patentansprüche gemäss Regel 86(2) EPÜ.

**1.** Verfahren zur Herstellung eines Katalysators zur flammlosen Umsetzung von Wasserstoff und/oder Kohlenwasserstoffe enthaltenen Flüssigkeiten und/oder Gasen in Wärmestrahlung, aufweisend die Schritte:
- Bereitstellen eines Trägermaterials auf Aluminium- und/oder Siliciumbasis,
- Kontaktieren des Trägermaterials mit einer wässrigen Lösung aufweisend mindestens ein Metallsalz, sowie mindestens einen organischen Lösungsvermittler zur Verbesserung der Löslichkeit der eingesetzten Metallsalze, und
- Trocknung des Trägermaterials
um ein imprägniertes Trägermaterial zu erhalten, **dadurch gekennzeichnet, daß** die metallsalzhaltige Lösung vor der Kontaktierung des Trägermaterials magnetisch polarisiert wird.

**2.** Verfahren gemäß Anspruch 1, **dadurch gekennzeichnet, daß** das Trägermaterial eine Dichte von <4 g/cm³ aufweist.

**3.** Verfahren gemäß mindestens einem der Ansprüche 1 und 2, **dadurch gekennzeichnet, daß** das Metall des Metallsalzes mindestens ein Metall der Gruppe bestehend aus Gold, Silber, Platin, Rhodium, Osmium, Cobalt, Vanadium, Titan, Zirconium, Mangan oder Nickel ist.

**4.** Verfahren gemäß mindestens einem der Ansprüche 1 bis 3, **dadurch gekennzeichnet, daß** das Anion des Metallsalzes mindestens ein Anion der Gruppe bestehend aus Halogenid, Amin, Sulfid, Sulfat, Nitrat, Carboxylat, Sulfonat, Phosphat, Oxid oder Alkoholat ist.

**5.** Verfahren gemäß mindestens einem der Ansprüche 1 bis 4, **dadurch gekennzeichnet, daß** das Trägermaterial im Anschluß an die Kontaktierung mit der metallsalzhaltigen Lösung bei einer Temperatur von 40 bis 300 °C getrocknet wird.

**6.** Vorrichtung zur flammlos katalytischen Umsetzung von Wasserstoff und / oder Kohlenwasserstoffe enthaltenen Flüssigkeiten und / oder Gasen in Wärmestrahlung aufweisend:
- Ein an zumindest einer Seite offenes Gehäuse,
- eine Vorheizvorrichtung
- einen gemäß einem oder mehreren der Ansprüche 1 bis 6 hergestellten Katalysator.

**7.** Vorrichtung gemäß Anspruch 6, **dadurch gekennzeichnet, daß** das Gehäuse mindestens einen Einlaß für Gas und / oder Flüssigkeit aufweist.

**8.** Vorrichtung gemäß einem oder mehreren der Ansprüche 6 und 7, **dadurch gekennzeichnet, daß** das zu oxidierende Gas und / oder die Flüssigkeit der Vorrichtung mit einem Druck >50 mbar, vorzugsweise >20 mbar, besonders bevorzugt >5 mbar zugeführt wird.

**9.** Vorrichtung gemäß einem oder mehreren der Ansprüche 6 bis 8, **dadurch gekennzeichnet, daß** sich die Wellenlänge der bei der katalytischen Umsetzung erzeugten Wärmestrahlung durch die Bauart des Gehäuses beeinflussen läßt.

**10.** Vorrichtung gemäß einem oder mehreren der Ansprüche 6 bis 9, **dadurch gekennzeichnet, daß** sich die Wellenlänge der bei der katalytischen Umsetzung erzeugten Wärmestrahlung durch den Druck, mit welchem das zu oxidierende Gas und / oder die Flüssigkeit der Vorrichtung zugeführt werden beeinflussen läßt.

**11.** Vorrichtung gemäß einem oder mehreren der Ansprüche 6 bis 10, **dadurch gekennzeichnet, daß** sich die Wellenlänge der bei der katalytischen Umsetzung erzeugten Wärmestrahlung durch die Stärke und / oder Dichte des verwendeten Katalysators beeinflussen läßt.

**12.** Verwendung einer Vorrichtung gemäß einem oder mehreren der Ansprüche 6 bis 11 als Vorrichtung zur Wärmeerzeugung.

**13.** Vorrichtung gemäß Anspruch 12, **dadurch gekennzeichnet, daß** diese aus einem oder mehreren Segmenten besteht, welche aus Vorrichtungen gemäß einem oder mehreren der Ansprüche 6 bis 11 gebildet werden, und welche miteinander verbunden werden können.

**14.** Verwendung einer Vorrichtung gemäß einem oder mehreren der Ansprüche 12 und 13 zur Warmwassererzeugung.

**15.** Verwendung einer Vorrichtung gemäß einem oder mehreren der Ansprüche 12 und 13 in Gebäudeheizungsanlagen.

**16.** Verwendung einer Vorrichtung gemäß einem oder mehreren der Ansprüche 12 und 13 zur Warmlufterzeugung.

**17.** Verwendung einer Vorrichtung gemäß einem oder mehreren der Ansprüche 12 und 13 zur Lacktrocknung in der Lackierindustrie.

**18.** Verwendung einer Vorrichtung gemäß einem oder mehreren der Ansprüche 12 und 13 zur Werkstückerwärmung in der Umformtechnik und Kunststoff- oder Gummiindustrie.

**19.** Verwendung einer Vorrichtung gemäß einem oder mehreren der Ansprüche 12 und 13 zur katalytischen Umsetzung von Ab- oder Schadgasen.
